# EUROPÄISCHE PATENTSCHRIFT

(11) **EP 0 709 528 B1**
(45) Veröffentlichungstag und Bekanntmachung des Hinweises auf die Patenterteilung: **06.06.2001**
(21) Anmeldenummer: 95115998.7
(22) Anmeldetag: 11.10.1995
(51) Int. Cl.: E03C 1/33, A47B 77/06, F16B 2/24

(54) **Haltevorrichtung zur Befestigung eines Geräteeinsatzes in einer Grundplatte**
Securing device for fastening an appliance in a base plate
Dispositif d'accrochage pour la fixation d'un appareil dans un meuble

(30) Priorität: 21.10.1994 DE 4437630
(43) Veröffentlichungstag der Anmeldung: 01.05.1996
(73) Patentinhaber: A. Raymond GmbH & Co. KG, D-79539 Lörrach (DE); FRANKE GmbH, 79713 Bad Säckingen (DE)
(72) Erfinder: Mutz, Bernd, D-79650 Schopfheim (DE); Rüttnauer, Gerd, D-79739 Schwörstadt (DE)
(74) Vertreter: Kirchgaesser, Johannes, Dipl.-Ing.

(56) Entgegenhaltungen:
- DE-A- 2 259 779
- DE-A- 3 040 180
- DE-B- 2 554 012
- DE-C- 3 153 165
- DE-U- 1 878 393
- US-A- 3 071 780

## Beschreibung

Die Erfindung bezieht sich auf eine Haltevorrichtung zur Befestigung eines Geräteeinsatzes in einer Grundplatte, wie z.B. einer Spülwanne in einer Küchenarbeitsplatte, bestehend aus einer an der Arbeitsplatte festlegbaren Halteklammer und einem am Geräteeinsatz angewinkelten Haltesteg, welcher in die Halteklammer einführbar und in dieser verankerbar ist.

Aus der **US - A - 3 071 780**, insbesondere Figur 12, ist eine derartige Haltevorrichtung bekannt, bei der die Halteklammer aus zwei über einen Quersteg U-förmig miteinander verbundenen Schenkeln besteht, von denen der eine Schenkel am Rande der Plattenaussparung in vorbestimmter Lage festschraubbar ist und der andere ein elastisch auffederbarer Klemmschenkel ist. Beim Einführen des am Geräteeinsatz angewinkelten Halteschenkels zwischen die beiden Schenkel der Halteklammer stützt sich der Halteschenkel mit einer entgegen der Einführrichtung schräg nach oben abgewinkelten Kante an dem auffederbaren Schenkel ab und stützt sich mit der scharfen Kante an dessen glatter Innenwand kraftschlüssig ab. Diese Klemmverbindung ist in der Praxis unbefriedigend. Sie bietet keine Gewähr für einen dauerhaften Sitz, weil die Klemmwirkung infolge Materialermüdung des Klemmschenkels nachlassen kann.

Aus der **DE - A - 30 40 180** ist eine ähnliche Halteklammer bekannt, bei welcher ein am Geräteeinsatz angewinkelter Haltesteg in der Halteklammer in verschiedenen Raststufen verankerbar ist. Die Halteklammer ist hierbei winkelförmig gebogen und an einem Schenkel mit zwei Schlitzen versehen und wird von der Plattenunterseite aus mit dem geschlitzten Schenkel auf einen Haltestreifen geschoben, während der andere Schenkel sich am Rand der Plattenaussparung abstützt. Der Haltestreifen ist seinerseits mit dem Haltesteg fest verbunden und auf einer Seite mit Rastrillen versehen, in welche der nach oben führende Schenkel der Halteklammer mit einer an dessen oberen Rand angeformten Klemmnase beim Aufdrücken der Halteklammer einrastet.

Bei dieser Befestigungsvorrichtung wird es als Nachteil empfunden, daß die Halteklammer von unten auf den Haltesteg bzw. den an diesem befestigten Haltestreifen aufgedrückt werden muß. Das bedeutet, daß der Monteur beim Einbau einer Küchenspüle in eine bereits vorhandene Arbeitsplatte unter der Spülwanne liegend die Halteklammern "über Kopf' auf die Haltestreifen aufdrücken muß. Will man die Spüle später einmal herausnehmen, so müssen die Haltestreifen von den Haltestegen sehr mühsam von unten getrennt oder zumindest gelockert und die Klemmschenkel nach innen gedrückt werden.

Aufgabe der Erfindung ist es, eine Halteklammer der vorgenannten Art mit einer verbesserten Verbindung zwischen dem Klemmschenkel und dem Raststeg herzustellen, so daß die Spülwanne problemlos von oben in die Plattenaussparung eingesetzt und der Klemmschenkel mit dem Haltesteg der Spülwanne leicht und sicher verbunden und im Bedarfsfalle auch einfach gelöst werden kann.

Diese Aufgabe wird nach der vorliegenden Erfindung dadurch gelöst, daß der elastisch auffederbare Klemmschenkel mit zum Halteschenkel weisenden Rastzacken versehen ist, in welche der Haltesteg mit einem zu den Rastzacken gerichteten Raststeg nach dem Eindrücken in die Halteklammer einrastbar ist, wobei der Klemmschenkel im Bereich der Rastzacken schräg zum oberen Rand des Halteschenkels und oberhalb der Rastzacken schräg vom Halteschenkel weg nach außen gerichtet ist.

Durch die erfindungsgemäßen Merkmale wird auf einfache Weise erreicht, daß der Haltesteg der Spülwanne durch das Zusammenwirken von Raststeg und Rastzacken nunmehr formschlüssig mit den Klemmschenkeln verbunden ist, und daß aufgrund der stufenweise abgesetzten Rastzacken sichergestellt ist, daß die Spülwanne mit ihrem Rand stets fest auf der Arbeitsplatte aufliegt.

Weitere zur Befestigung der Küchenspüle förderliche Maßnahmen sind in den Unteransprüchen angegeben und sollen nachfolgend in Verbindung mit dem in der Zeichnung dargestellten Ausführungsbeispiel näher beschrieben werden.
Es zeigt:
- Fig. 1: die erfindungsgemäße Halteklammer in Vorderansicht,
- Fig. 2: die Halteklammer in Ansicht "A",
- Fig. 3: einen Schnitt durch den Klemmschenkel im Bereich der Rastzacken,
- Fig. 4: eine perspektivische Ansicht von der Halteklammer,
- Fig. 5: eine Spülwanne **vor** dem Eindrücken des Haltesteges in den Rastbereich einer montierten Halteklammer,
- Fig. 6: die gleiche Einbausituation **nach** dem Eindrücken des Haltesteges und
- Fig. 7: die gleiche Einbausituation beim Aufbiegen der Halteklammer.

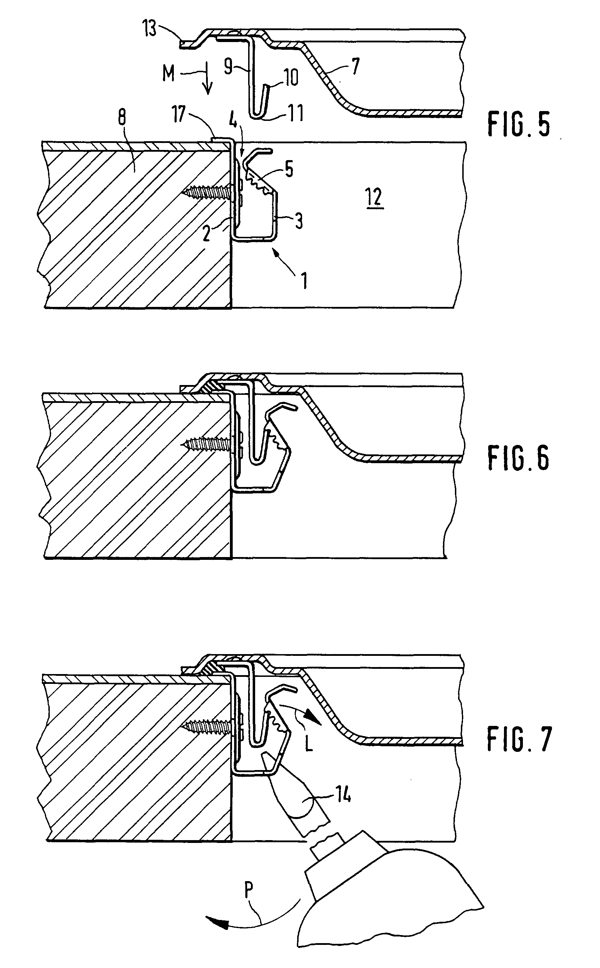

Die in den Figuren mit **1** bezeichnete Halteklammer dient zur Befestigung eines Geräteeinsatzes in einer Grundplatte und insbesondere zur Befestigung einer Spülwanne **7** in einer Küchenarbeitsplatte **8** (Figuren 5 bis 7).

Die Halteklammer **1** besteht hierbei aus einem länglichen Halteschenkel **2** und zwei an dessen Enden über einen Quersteg 18 U-förmig angeformten Klemmschenkeln **3**, wobei der Halteschenkel **2** am Rand der Plattenaussparung **12** der Arbeitsplatte **8** in vorbestimmter Lage durch ein Befestigungsloch **16** festgeschraubt oder auf sonstige Weise befestigt oder verklebt wird. Hierzu ist am oberen Rand des Halteschenkels **2** ein Steg **17** rechtwinklig abgebogen, welcher sich beim Anlegen der Halteklammer **1** auf der Plattenoberkante abstützt (Figur 5).

Der Klemmschenkel **3** ist in drei Bereiche aufgeteilt: den unteren Federbereich **3'**, den mittleren Rastbereich **3"** und den oberen Einführbereich **3"'**. Der untere Federbereich **3'** verläuft etwa parallel zum Halteschenkel **2.** Der mittlere Rastbereich **3"** ist zum Halteschenkel **2** schräg aufwärts gerichtet und bildet am oberen Ende mit dem Halteschenkel **2** einen offenen Engpaß **4.** Daran schließt sich der schräg von dem Halteschenkel **2** wegführende Einführbereich **3"'** an.

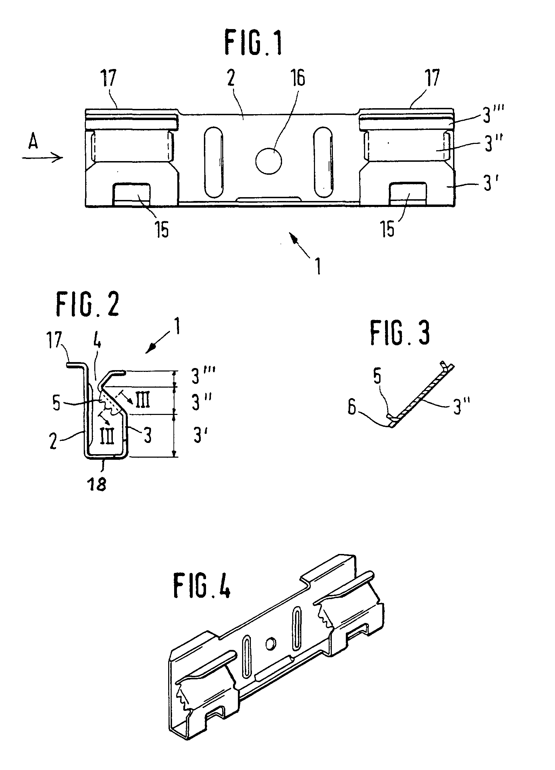

Im mittleren Bereich **3"** ist der Klemmschenkel **3** mit zum Halteschenkel **2** weisenden Rastzacken **5** versehen. Diese sind, wie aus Figur **3** ersichtlich, aus den seitlichen Kanten **6** des Klemmschenkels **3** ausgeformt und um mindestens den Betrag der Zackentiefe zum Halteschenkel **2** hin abgewinkelt.

Die auf der Arbeitsplatte **8** zu befestigende Spülwanne **7** weist an ihrer Unterseite mehrere senkrecht angewinkelte Haltestege **9** mit nach oben gerichteten Raststegen **10** auf, welche mit den Rastzacken **5** des Klemmschenkels **3** in der in Figur 6 gezeigten Weise zusammenwirken.

Beim Absenken der Spülwanne **7** auf die Arbeitsplatte **8** in Richtung des Pfeiles "M" (Figur 5) trifft der Haltesteg **9** mit seinem umgebogenen Ende **11** zunächst auf den schräg vom Halteschenkel **2** weggerichteten Einführbereich **3"'** des Klemmschenkels **3,** wodurch letzterer in den Innenraum der Aussparung **12** auffedert und nach dem Passieren des Engpasses **4** zwischen Einführbereich **3"'** und Rastbereich **3"** wieder zurückfedert.

Die Rastzacken **5** sind hierbei so angeordnet, daß der Raststeg **10** unter einem dieser Rastzacken **5** einrastet, wenn die Spülwanne **7** mit ihrem Rand **13** auf der Arbeitsplatte **8** fest aufliegt (Figur 6). Dies geschieht an mehreren Stellen rings um die Aussparung **12** gleichzeitig, so daß die Spülwanne **7** mit der Arbeitsplatte **8** durch einfaches Niederdrücken von oben fest verbunden ist.

Will man die Spülwanne **7** einmal lösen, so müssen die Klemmschenkel **3,** wie in Figur 7 gezeigt, zur Spülwanne **7** in Richtung des Pfeiles "L" hingebogen werden, bis die Rastzacken **5** die Raststege **10** nach oben freigeben. Hierzu ist im unteren Bereich **3'** der Klemmschenkel **3** jeweils eine Öffnung **15** vorgesehen, in welche ein Hilfswerkzeug **14** einführbar ist, um den Klemmschenkel **3** durch Drücken dieses Werkzeuges **14** in Richtung des Pfeiles "P" aufzubiegen.

## Patentansprüche

1. Haltevorrichtung zur Befestigung eines Geräteeinsatzes in einer Grundplatte, insbesondere einer Spülwanne in einer Küchenarbeitsplatte, bestehend aus einer in einer Aussparung (12) der Arbeitsplatte (8) festlegbaren Halteklammer (1) und einem am Geräteeinsatz angewinkelten Haltesteg (9), welcher in die Halteklammer (1) einführbar und in dieser verankerbar ist, wobei die Halteklammer (1) aus zwei über einen Quersteg (18) U-förmig miteinander verbundenen Schenkeln (2) und (3) besteht, von denen der eine Schenkel (2) am Rande der Plattenaussparung (12) in vorbestimmter Lage festschraubbar ist, und der andere ein elastisch auffederbarer Klemmschenkel (3) ist,
**dadurch gekennzeichnet,** daß der elastisch auffederbare Klemmschenkel (3) mit zum Halteschenkel (2) weisenden Rastzacken (5) versehen ist, in welche der Haltesteg (9) mit einem zu den Rastzacken (5) gerichteten Raststeg (10) nach dem Eindrücken in die Halteklammer (1) einrastbar ist, wobei der Klemmschenkel (3) im Bereich der Rastzacken (5) schräg zum oberen Rand des Halteschenkels (2) und oberhalb der Rastzacken (5) schräg vom Halteschenkel (2) weg nach außen gerichtet ist.

2. Haltevorrichtung nach Anspruch 1, dadurch gekennzeichnet, daß die Rastzacken (5) aus den seitlichen Kanten (6) des Klemmschenkels (3) ausgeformt und um mindestens den Betrag der Tiefe der Rastzacken (5) zum Halteschenkel (2) hin abgewinkelt sind.

3. Haltevorrichtung nach Anspruch 1 oder 2, dadurch gekennzeichnet, daß der Klemmschenkel (3) im Bereich unterhalb der Rastzacken (5) eine Öffnung (15) zum Einsetzen eines Hebelwerkzeuges (14) aufweist.

## Claims

1. A holding device for fixing an appliance insert in a base plate, in particular a rinsing bowl in a kitchen worktop, comprising a holding clip (1) which can be secured in an opening (12) in the worktop (8) and a holding arm (9) which is arranged at an angle on the appliance insert and which can be introduced into and anchored in the holding clip (1), wherein the holding clip (1) comprises two legs (2) and (3) which are connected together in a U-shape by way of a transverse web (18) and of which the one leg (2) can be screwed fast at a predetermined position to the edge of the opening (12) in the worktop and the other is a clamping leg (3) which can be elastically sprung open, characterised in that the clamping leg (3) which can be elastically sprung open is provided with detent prongs (5) which face towards the holding leg (2) and into which the holding arm (9) can be latchingly engaged with a detent arm (10) which is directed towards the detent prongs (5) after being pressed into the holding clip (1), wherein in the region of the detent prongs (5) the clamping leg (3) is directed inclinedly towards the upper edge of the holding leg (2) and above the detent prongs (5) the clamping leg (3) is directed outwardly inclinedly away from the holding leg (2).

2. A holding device according to claim 1 characterised in that the detent prongs (5) are shaped out of the lateral edges (6) of the clamping leg (3) and are angled towards the holding leg (2) by at least the magnitude of the depth of the detent prongs (5).

3. A holding device according to claim 1 or claim 2 characterised in that in the region beneath the detent prongs (5) the clamping leg (3) has an opening (15) for the insertion of a lever tool (14).

## Revendications

1. Dispositif de retenue pour la fixation d'un élément d'insertion dans une plaque de base, notamment d'un évier dans une paillasse ou un plan de travail de cuisine, se composant d'une agrafe de retenue (1) destinée à être bloquée en position dans un évidement (12) ménagé dans la paillasse (8) et d'une barrette de retenue (9) fixée, suivant une disposition repliée en angle droit, sur l'élément d'insertion, qui est destinée à être introduire dans l'agrafe de retenue (1) et à être ancrée en position dans celle-ci, l'agrafe de retenue (1) se composant en l'occurrence de deux pattes (2) et (3) reliées l'une à l'autre suivant une disposition en forme de U par l'intermédiaire d'une entretoise (18), une patte (2) étant en l'occurrence destinée à être vissée, à un emplacement prédéterminé, sur le bord de l'évidement (12) et l'autre étant une patte de serrage (3) capable de céder par déformation élastique, caractérisé en ce que la patte de serrage (3) capable de céder par déformation élastique est munie de crans d'accrochage (5) orientés en direction de la patte de retenue (2) dans lesquels la barrette de retenue (9), après avoir été introduite par pression dans l'agrafe de retenue (1), est destinée à venir s'encastrer en prise d'accrochage au moyen d'une barrette d'accrochage (10) orientée en direction des crans d'accrochage (5), la portion de la patte de serrage (3) comportant les crans d'accrochage (5) étant en l'occurrence orientée suivant une disposition oblique en direction du bord supérieur de la patte de retenue (2) et sa portion située au-dessus de la portion crantée (5) étant en l'occurrence orientée suivant une disposition oblique vers l'extérieur en s'écartant de la patte de retenue (2).

2. Dispositif de retenue selon la revendication 1, caractérisé en ce que les crans d'accrochage (5) sont réalisés par formage dans les arêtes latérales (6) de la patte de serrage (3) et qu'ils sont orientés de manière angulaire en direction de la patte de retenue (2) dans une proportion correspondant au moins à la valeur de la profondeur des crans d'accrochage (5).

3. Dispositif de retenue selon la revendication 1 ou 2, caractérisé en ce que la patte de serrage (3) comporte, dans sa zone se trouvant sous les crans d'accrochage (5), une ouverture (15) pour l'introduction d'un outil (14) destiné à faire office de levier.
